# EUROPEAN PATENT APPLICATION

(11) **EP 3 932 166 A1**
(43) Date of publication of application: **05.01.2022**
(21) Application number: 20763393.4
(22) Date of filing: 21.02.2020
(51) Int. Cl.: A01B 79/00, A01M 9/00, B64D 1/16, B64C 39/02

(54) **MULTI-PURPOSE ON-BOARD SYSTEM FOR INDEPENDENTLY RELEASING BIOLOGICAL AGENTS FOR PRECISION BIOLOGICAL PEST CONTROL**

(30) Priority: 25.02.2019 BR 102019003863
(71) Applicant: NCB SISTEMAS EMBARCADOS EIRELI - EPP, 02340-040 São José dos Campos (BR)
(72) Inventor: NICODEMOS, Fernando Garcia, 02340-040 São Paulo (BR)
(74) Representative: Elzaburu S.L.P.
(86) International application number: PCT/BR2020/050054
(87) International publication number: WO 2020/172731

(57) **Abstract**

**CONTROL".** A multipurpose embedded system to automate the releasing process of different inputs for precision biological control of pests through, but not limited to, Unmanned Aerial Vehicles - UAVs (or drones). It is composed of a high performance multipurpose electronic equipment (hardware), a GPS/GLONASS/GALILEO dedicated receiver or shared from the aircraft and four different dedicated electromechanical releasers named BioBOT - Releaser of Loose Parasitized Eggs, BioCOTe - Releaser of Loose Masses, BioMITe - Releaser of Alive Inputs (Mites) and BioFUNgus - Releaser of Beneficial Fungi in Dry Powder. This system enables full compliance of the entire biological control chain, from production, monitoring, integrated digital planning, precision and controlled releases and reliable reporting.

## Description

### BRIEF PRESENTATION

It refers this application for an Invention Patent of a **"MULTI-PURPOSE ON-BOARD SYSTEM FOR INDEPENDENTLY RELEASING BIOLOGICAS AGENTS FOR PRECISION BIOLOGICAL PEST CONTROL",** particularly a multipurpose embedded system to control the process of releasing different biological agents, each releaser with its release format, for automation of biological pest control through conventional means (e.g., walking equipped in backpacks), land vehicles (e.g. motorcycles, tractors, uniport, etc.), manned aerial aircraft (e.g., agricultural aircraft, experimental, other small, sized vehicles etc.) unmanned aerial vehicles (e.g. UAV - Unmanned Aerial Vehicle, RPA - Remotely Piloted Aircraft, drone, etc.). The depositor is the company NCB SISTEMAS EMBARCADOS EIRELI - EPP and the inventor is its managing partner of research and development and legal representative Fernando Garcia Nicodemos.

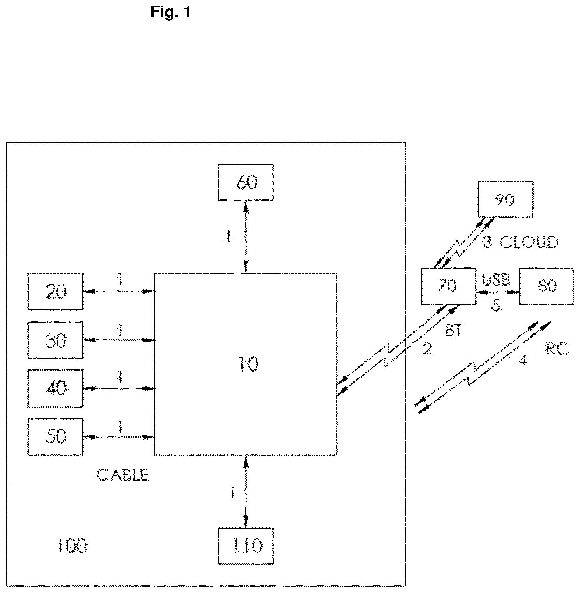

In general, in the full version illustrated in FIGURE 1, the multipurpose embedded system can be composed to operate with: four different dedicated electromechanical releasers, respectively *BioBOT* - *Loose Parasitized Egg Releaser* (20), *BioCOTe* - *Single Mass Releaser* (30), *BioMITe* - *Alive Input (Mites) Releaser* (40) and *BioFUNgus* - *Beneficial Fungi Powder Releaser* (50), triggered and controlled individually or simultaneously by means of a control cable (1), simply called releaser or "dispenser", for each distinct biological agent, that collects the inputs in a loose format, from a storage compartment and performs the controlled and/or georeferenced release through the means and vehicles mentioned above; and a multipurpose electronic control equipment (10), which when configured and/or connected to a portable computer (70), with the use of cable, or without, through bluetooth interface (2), performs the control of the exact amount of biological agents to be released by the releaser or "dispenser" in ml/ha (milliliters per hectare) or g/ha (grams per hectare) or ml/min (milliliters per minute) or g/min (grams per minute), with individual or simultaneous activation of one or more releasers, according to FIGURE 1.

The multipurpose embedded system can connect or be controlled through a standard communication interface by other navigation and guidance systems available on the market and equipped in the means and vehicles mentioned above. It can also be connected or controlled by a man-machine touchscreen interface (60) via control cable (1), or by a mobile device (70) (e.g. smartphone, tablet PC, laptop, drone onboard computer, etc.) via bluetooth interface (2) with support for control radio (80) of the vehicle (100) (e.g. drone) connected by radio signal (4), interconnected via USB cable (5), whose software or application allows the management and configuration of the multi-embedded system use with cloud support, with data transfer via internet (3), as well as perform mission planning and georeferenced digital mapping of the focus area of the release through a Mission Planner, developed specifically for compatibilization and autonomous operation of the four mechanical releasers individually or simultaneously, also illustrated in FIGURE 1.

The multipurpose embedded system as well as the information generated by it, can be managed through a cloud-based software system (90), for remote tracking, mission and route planning, product batch management, generation of pre and post-release profiles, automatic pest monitoring and generation of follow-up and release reports, also illustrated in FIGURE 1.

### FIELD OF APPLICATION

The embedded system object of this invention patent application has main application in the agricultural area for the release of biological agents in a loose format for precision biological pest control in crops.

The releasing of biological agents can be compared with the liquid spraying system, subject to patent BR1020140117938, authored by the natural person Fernando Garcia Nicodemos, managing partner of NCB SISTEMAS EMBARCADOS EIRELI - EPP. Despite the similarity, this system cannot be used or adapted to this new patent application because the release of alive "dry" inputs (biological agents) has its particularities, different from what is performed and optimized when it comes to liquid inputs. Despite using some of the knowledge of the state of the hardware technique, object of the previous patent, the treatment of hardware interfaces, software and electromechanical requirements to meet the releases of different biological agents are different, according to the object of this new patent.

### ART FUNDAMENTALS

Currently, one of the world's main challenges in agriculture is the promotion of optimal balance between economic, social, environmental and security. Biological pest control is one of the oldest tactics used by man. Due to the various imbalances caused by the indiscriminate use of organinsecticides and awareness of environmental problems, biological control and its innovations in the area have increasingly occupied more space on the world stage. *"The basic premise of biological control is to control agricultural pests and disease-transmitting insects from the use of their natural enemies, which can be other beneficial insects, predatory mites, parasitoids, and microorganisms such as fungi, viruses and bacteria."*

With the development of precision agriculture, embedded electronic navigation systems in land and air vehicles (e.g. tractors, motorcycles, manned and unmanned aircraft, etc.), have become increasingly adopted and indispensable equipment. Although there are other satellite navigation systems (e.g. GALILEO - European system, GLONASS - Russian system, etc.), the vast majority of the receivers of these equipment use the North American GPS - Global Positioning System. More recently, receivers that use a combination of more than one or all of these navigation systems at the same time have emerged, making the solutions more accurate.

In general, still today the Brazilian market contrasts with the evolution enunciated through a paradigm in the current process of biological control: manual release. There are few mechanized options also with low integration and control. To exemplify the procedures currently used in the release, as well as the comparison with the innovations object of this patent, four main distinct biological agents and their loose "formulations" are taken, but not limited to these, related to the four releasers object of this patent: the insects Trichogramma galloi (in the form of loose parasitized eggs) and Cotesia flavipes (in the loose masses form), the mite Neoseiulus californicus (in the loose alive form) and the beneficial fungus Beauveria bassiana (in the loose dry power form).

The most common procedure currently used to perform biological control with Trichogramma is the manual distribution of small pieces of paper (cardboards) containing parasitized eggs "sticked" inside (e.g. eggs parasitized with Trichogramma), in parallel lines, with predefined intervals between each line, in order to ensure the coverage of the desired area (parts or in totality).

The procedure for biological control through Cotesia is similar to that of Trichogramma, however, small plastic cups (non-biodegradable) or other biodegradable or non-biodegradable paper encapsulations are used, containing a set of masses of Cotesia pupae. After the birth of insects from these masses, these plastic cups are opened and placed in parallel lines and at predefined points between each line, in order to ensure the coverage of the desired area (parts or in totality).

Similarly to the procedures presented above, Neoseiulus mites are distributed manually through standard vials or saches at the predefined points between each line, in order to ensure the coverage of the desired area (parts or in totality). This format only allows small areas or greenhouses to be serviced. There are a few automation attempts, described later.

In the case of the Beauveria fungus, the most used procedure is liquid spraying, after mixing this input with water. There is still a gap of equipment that allow the dry spraying of these fungi, in loose dry powder.

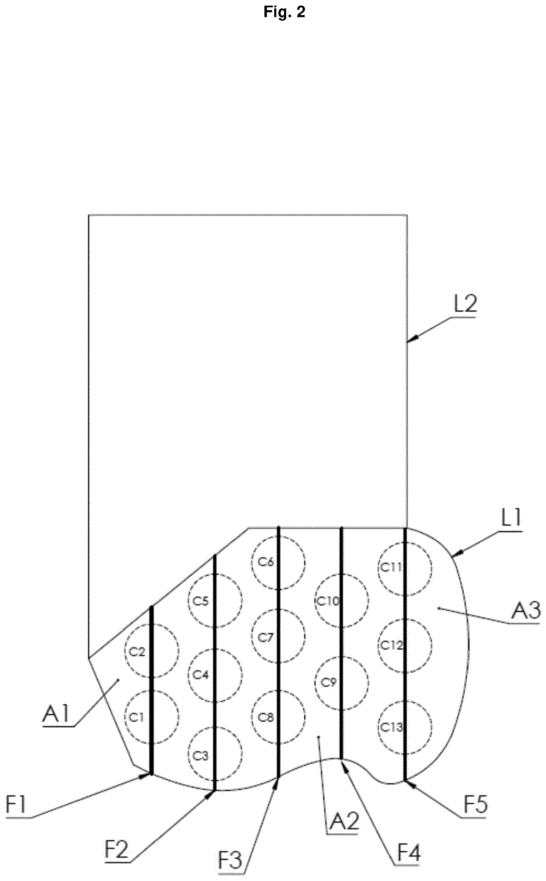

In order to better define the conditions related to the state of the art, FIGURE 2 illustrates in general the procedures currently adopted by collaborators (A1, A2 and A3) to release Trichogramma insects (similarly used for Cotesia and the Neoseiulus mite), in which the line (L1) delimits the boundaries of the area to be covered with manual release , the line (L2) delimits the boundaries of the total uncovered area due to the limitation of manual release, the lines (F1, F2, F3, F4 and F5) indicate the parallel lines where the pontual release should take place and the circles (C1, C2, C3, C4, C5, C6, C7, C8, C9, C10, C11, C12 and C13) indicate the predefined intervals between each line where this manual distribution should be performed, within the limits of L1, considering the radius of action of the biological agents.

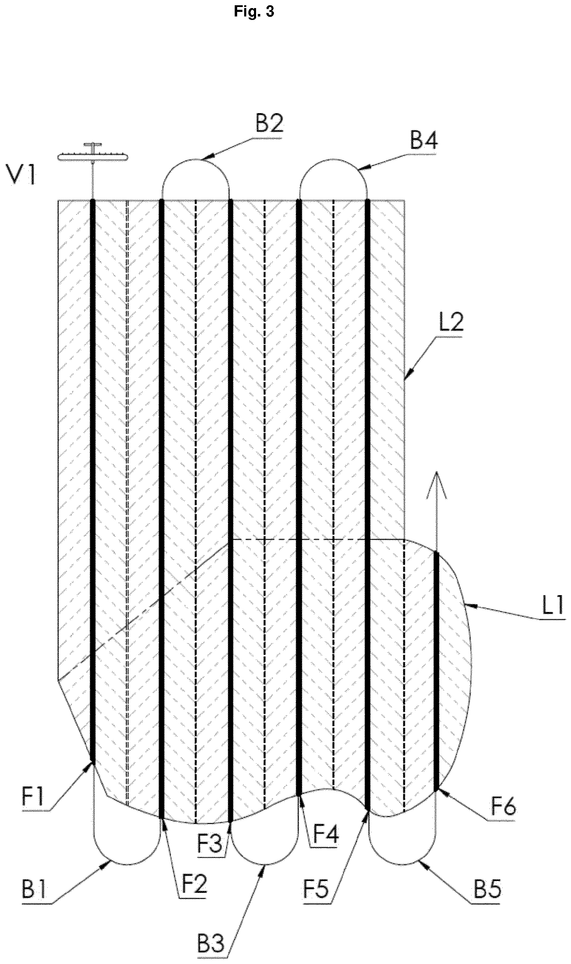

FIGURE 3 illustrates in general a process of spraying liquid inputs (e.g. agrodefensives), which includes the liquid spraying of the fungus Beauveria, where the agricultural aircraft (V1) sprays the total area (L1+L2) much faster, the lines (F1, F2, F3 and F4) indicate the parallel lines where the spraying should occur with liquid overlap to the total area and the lines (B1, B2, B3, B4 and B5) illustrate the returns ("balloons") of the agricultural aircraft.

### 1) STATE OF ART AND ITS EVOLUTION

Indeed, increasing efficiency and productivity in order to reduce costs and environmental impacts are old and well-known concerns in the global agricultural market. In the national market, the increasing pressure of farmers for more efficient processes and the advances of biological control for pest control has contributed to the depositor, through the legal entity directed by him, to be a new entrant with his products. In this context, the automation of the releasing processes of biological inputs, interconnected with navigation systems via GPS, have presented itself as an unavoidable solution. It is indispensable for the feasibility to serve large areas with greater efficiency and to guarantee the deadlines when releasing alive inputs.

However, the lack of solutions to automate the releases that can guarantee larger scales is still a barrier for more efficient means, such as agricultural aviation, motorcycles, tractors, drones, etc., to be used in the national market of biological control, especially those of precision. Thus, the line of evolution of the state of the art will be defined in two sections. The first is the "state of knowledge", where some reference articles will be presented in the area and the second is the "state of the technique" itself, where solutions will be presented that aim to automate the release of biological agents in general. Finally, a brief comparative summary will be presented between the current state of these solutions and the innovations and benefits of the system object of the present invention, with the goal of demonstrating the differentiation and evolution intrinsic to the invention.

### A) State of Knowledge

The process of releasing biological inputs involves numerous disciplines, such as the type and technique of release, whether it is done in loose or encapsulated format, availability of collaborators, equipment and available vehicles, among others.

Although the selection is not exhaustive and is aware that there are other works related to the disciplines of the area, this section present some reference academic papers to demonstrate the state of knowledge focusing on the release using manual techniques, by land and some initiatives of aerial application to achieve larger scales.

The commercial operation of the biological pest control is currently carried out in more than 12 (twelve) countries besides Brazil, including Russia, China and European countries. In countries where production costs are relatively low, manual release techniques are used more frequently, while in more developed countries, the reduction in production costs is the result of mechanization of the release. With the increasing use of biological control, new techniques and new release processes require development in order to increase efficiency and precision, access to large areas and reduce the time and costs involved.

### 1- Evaluation of the release of loose parasitized eggs - wasps (e.g. biological agent Trichogramma galloi)

The release of eggs parasitized with Trichogramma by land, with manual distribution, is the most common method reported in the literature, such as ***ALLEN, BURBUTIS**, **RIDGWAY**, **BIGLER, LOPES, NEIL*** and ***PROKRYM.*** They can be released in a protected or unprotected way, occurring through eggs, pupae or adults. Previously, this input was allocated directly to the culture at release points, as presented in ***STINNER**.* However, today, in most studies, the release of this material adhered to a cardboard substrate (pieces of paper) or various types of paper (tarpaulins, filter, etc.) was adopted, illustrated in ***SMITH.*** These substrates are distributed at properly chosen release points and attached to plants with string, fastener or clips in various cultures, as presented in ***ALLEN, DOLPHIN, HASSAN, HULME*** and ***NEWTON*** (based on FIGURE 2). In some studies, cards or strips of paper were used that are placed between the leaves of the plants, as in ***PROKRYM.***

In most studies, the material has been distributed manually at specific points, such as ***SMITH,*** although in some cases containers have been mechanically placed, via a moving vehicle, as in ***ABLES.*** The techniques that are based on the release at different points present some drawbacks, such as the need for a good distribution throughout the area and that the spacing between them allows the dispersion of the inputs throughout the area evenly, as in ***GUSEV.*** For this reason, several researchers have tried to develop techniques of distribution by dispersing or spraying eggs or adults of Trichogramma, rather than distribution at specific points.

In ***PINTO*** the efficiency of different Trichogramma release techniques for the control of sugarcane borer (Diatraea saccharalis) in São Paulo, Brazil, was evaluated. The authors verified that, in cold or rainy periods, the release of Trichogramma in the pupal phase, protected in paraffin cards, was the best technique when compared with the release of adults or with these unprotected, ensuring parasitism four times greater. On hot days and without rain, all techniques were similar. With the releases, ***PINTO*** observed directly on the leaves of sugarcane the control of sugarcane borer eggs by up to 100%. From the previous work, others were conducted in Brazil by several authors, in an attempt to improve the release techniques. Some experiments carried out in the state of São Paulo have indicated a good efficiency of pest control with Trichogramma in association with chemical control, using releases of 200,000 adult insects per hectare per week, for 3 consecutive weeks, as in ***PINTO*** and ***YOKOJI.*** Releases of 100,000 adult insects per hectare in less than three weeks were not efficient, as illustrated in ***YOKOJI, ARCARO, AFONSO, SCANDIUZZI*** and ***GOMES.***

In one of the first attempts to mechanize the application, ***SCHUTTE*** developed a spraying machine to apply parasitized eggs in apple orchards. ***ABLES*** used a compressed air spray for the application of Trichogramma in the field, based on the results obtained by other researchers. He concluded that the technique was not adaptable for Trichogramma, especially in applications in large areas. In the USA, ***NORDLUND*** developed a manual-start pneumatic spraying machine to release parasitized eggs on cotton plantations. This sprayer, coupled to a 15.2-meter hose, allowed an area of eight streets wide and 15.2m long to be treated with only one spray point. Using this same technique, ***JONES*** added bran flakes to the parasitized eggs, applying through a modified sower. It was the test of the first large-scale dispersion release of the genus Trichogramma in that country, at a density of 176,000 to 247,000 insects per hectare.

Later, also in the USA, ***GROSS*** developed a system consisting of a peristaltic pump, a chain and a centrifugal fan to release parasitized eggs above the canopy of cotton plants, at the density of 244,000 insects per hectare. These authors concluded that the developed systems could be used commercially for terrestrial applications, reaching uniform insect distributions, without damaging them. ***HAJI*** applied Trichogramma via central pivot in Petrolina - PE, and noted that this release system is practical, efficient and the cost is low.

Some authors tested the aerial applications of biological agents during the 1980s and early 1990s. In 1990, ***HOPE*** presented the results of studies of an equipment developed by its team, and tested from 1982 to 1985 in forests. In this case, a Bell 47 helicopter was used for better determination of the study in the tests. The equipment was composed of simple electrical components, mechanical components of a small planter and a centrifugal deflector used for sowing pine trees. In Canada, in the same year, ***SMITH*** modified a manual ventilation equipment for distribution of loose parasitized eggs in forests with the goal of simulating an aerial application. In Russia, ***BARABASH*** adapted a device to the valve of an overhead sprayer and successfully tested it on a production scale using a rotary-wing aircraft. It achieved releases with speeds of up to 100 m/s with accuracy of ± 10% of the nominal value. Other tests that also involved aerial spraying are reported in the works of ***KIKU*** in 1993 and ***GARDNER*** in 1996.

### 2- Evaluation of the release of masses - wasps (e.g. biological agent Cotesia flavipes)

Biological control through Cotesia has been successfully carried out since the 1970s, currently created on a large commercial scale in laboratories of sugar mills and in companies throughout Brazil. The release of this biological agent is labor intensive, because the most common release procedure is also manual (as illustrated in FIGURE 2), requiring large teams of employees only for this activity. As the success of a biological control program can be impaired by the release technique adopted, as illustrated in ***PINTO,*** some researchers evaluated alternative forms of releasing, where one of the goals included the decrease in the need for labor.

Compared to Trichogramma, for example, where alternatives for the release of loose parasitized eggs by land and aerial means have already been tested, Cotesia presents big challenges due to the fact that the pupae are grouped together by means of a silk, characterizing a set of masses (similar to the grouping of cotton threads), in a much higher volume. When releasing these Cotesia masses into the field, predation is a significant problem. However, this problem is minimized when the input is distributed manually over the leaves of plants after their birth, where predation is lower or when a larger amount is released to compensate the predation, as presented by ***MILLS, MARTINS*** and ***OLIVEIRA.*** In this context, a set of masses is packed inside small plastic cups, where the birth is monitored. Once the wasps are born these cups are released manually into the field.

Additionally, it was believed that to perform an automated release, the pupae should be physically or chemically separated from the masses, because the release of whole masses, before their birth, would cause the failure of the technique due to predation, according to ***FABBRIS*** and ***SISDELI.*** However, the use of predator repelents into power format can suppress this separation stage, according to ***RODRIGUES*** and ***VINHA,*** eliminating the need for the implementation of another process and manipulation during the industrialization of this biological agent. Natural or manipulated products were tested by ***RODRIGUES*** and ***VINHA***, indicating that some could be used as repellents without affecting the biology of Cotesia. ***PADUA*** [43] tested several repellents in the field, including trichloroisoisocyanuric acid. It did not obtain good results, probably by the use of closed experimental containers with plastic film. This packaging of the masses prevented the escape of the gases formed by the acid leading to the mortality of the adults, however, concluded that nutmeg should be included in mixtures of repellents to the masses of Cotesia. On the other hand, in air releases, ***PEDRAZZI*** indicated that the mixture of repellents should be made at the time of release, with the best options at the following concentrations: a) 0.10 grams of trichloroisocyanuric acid plus 0.05 grams of nutmeg per 5 masses; or (b) 0.10 grams of trichloroisoisocyanuric acid plus 0.10 grams of nutmeg per 5 masses; or c) 0.10 or 0.25 grams of trichloroisocyanuric acid per 5 masses.

### 3- Evaluation of the release of living inputs - mites (e.g. biological agent Neoseiulus californicus)

Biological control through mites has been carried out mainly in small and medium-sized crops and in greenhouses in Brazil and worldwide. The release of this biological agent is also performed in a costly manner, similar to the releases of Trichogramma and Cotesia (as exemplified in FIGURE 2). The procedure is also manual and labor intensive. This procedure is the most adopted, which can be performed with the alive input mixed with a substrate (e.g. vermiculite), packed in standardized containers.

The two-spotted mite, Tetranychus urticae, is considered a key pest in several crops of economic importance ***MORAES*** and *FLECHTMANN.* The main mite species used in biological control programs are: Phytoseiulus persimilis, P. macropilis, P. longipes, Neoseiulus californicus and Galendromus occidentalis. In Brazil, the use of Neoseiulus californicus and P. macropilis has stood out in the culture of strawberry, chrysanthemum, gerate, apple and peach, among others for the control of the two-spotted mite ***FERLA, POLETTI, BELLINI, SATO, MONTEIRO*** and ***WATANABE.***

In order to evaluate the agronomic efficiency of Neoseiulus californicus for biological control in strawberry crop, a study was conducted in a commercial strawberry production area located in the municipality of Estiva - MG ***BUENO*** and ***POLETTI.*** For this, two test beds were isolated with approximately 50m² each.

In one of these beds, the control of the two-spotted mite was conventionally performed with the use of acaricides recorded for strawberry crop. In the other bed, the control was carried out by releasing the predator mite, from the moment the first focus of this pest were detected. In each release five Neoseiulus californicus mites were introduced per m². Population fluctuation was estimated in each of the areas (conventional and biological control).

Samplings were carried out every two weeks over a period of 100 (one hundred) days.

It was evidenced that the control with acaricides was not efficient, and the infestation was about 40 (forty) times higher than that observed in the area where predatory mites were released for biological control. This result demonstrated that the introduction of the predator mite Neoseiulus californicus at the beginning of the two-spotted mite infestation is efficient, and may keep the population density of pests below the level of economic damage over a long period.

The feasibility of the combined use of Neoseiulus californicus mites with Phytoseiulus persimilis, widely used for the biological control of the two-spotted mite also in vegetable crops and ornamental plants in several countries of Europe and the United States has also been reported by several authors ***ZHANG, SANDERSON, SCHAUSBERGER, WALZER, BLÜMEL*** and ***RHODES.***

For the introduction of Neoseiulus californicus to be carried out at the correct time it is very important that the occurrence of the two-spotted mite is monitored periodically. In this context, equipment that automate and assist in a more efficient way the release of these inputs in open fields are of great relevance.

### 4- Evaluation of the release of beneficial fungi into the powder form - fungi (e.g. biological agent Beauveria bassiana)

Biological control of pests through fungi has shown to be extremely efficient in the open field. The current release procedure is liquid spraying by mixing this biological input with water or other applicable viscous liquid (as illustrated in FIGURE 3). This spraying can occur mainly with the main spraying equipment on the market (e.g. agricultural aircraft, tractors, etc.) and can be controlled with the equipment subject to patent BR1020140117938.

Due to technological challenges, powder release is not yet used in Brazil and worldwide and no references were found that performed tests and that uses this technique.

### B) State of The Technique

### 1- Evaluation of commercial equipment and products for automated release of loose parasitized eggs (e.g. biological agent Trichogramma galloi)

The starting point is an old patent and directly related to one of the proposed themes. MAEDGEN in 1981 obtained the patent called "Method and Apparatus for Airbone Release of Insect Eggs" (no. 4,260,108). It is a very old patent and no other records were found besides the inventive idea, that is, no commercial products were found, besides the fact that it is not extended to Brazil. The equipment focus on the release through the manual adjustment of several standardized holes to estimate the amount of input released and, in fact, there is no control.

Practical work aimed at the release of looze parasitized eggs began to emerge with greater intensity in the late 1990s and early 2000s through agricultural aviation. More recently, in 2002 in the US ***MILLS*** presented a submitted a report to the California Department of Pesticide Regulation. He performed the first tests of devices focused on the aerial releasing of Trichogramma in apple trees, using purely mechanical components. ***MILLS'*** work evolved, but according to ***CENTER*** in 2008, the devices used for the aerial application of Trichogramma were still in development at that time. No patent of this device and commercial exploitation related to ***MILLS*** and ***CENTER*** were found.

In Australia, aerial application began in Queensland in corn crop, with the initiative of ***BIORESOURCES.*** Loose eggs are mixed with semolina in a ratio of 1:10. One liter of the mixture is enough to cover 50 hectares. A standardized plastic bottle is coupled to a distribution line in the cockpit and the release is manually controlled via mechanical valve. No detailed information and operating manuals of these two initiatives were found.

The commercial release of Trichogramma in the form of loose eggs began in Brazil on a large scale in 2013, with the initiative of the proponent of this patent, supported by financial support to the proposal of a scientific, technological and innovation nature by CNPq, process 454356/2013-7, entitled *"SECa-BuG: Embedded System of Automatic Biological Control (Development of a New Equipment for Automation of the application of Parasitoids through Agricultural Aviation)".* NCB commercially offers *SECa-BuG* for the release of loose parasitized eggs through motorcycles and agricultural and/or light aircraft. This equipment allows the release and fixed control of the release rate in grams per hectare, without integration with GPS systems. With a motorcycle it is possible to cover the release on 40 hectares per hour (320 ha for 8 hours of work), and in manned aircraft, it reaches the order of 1,000 hectares per hour. This simplified equipment has not been patented and has been commercially exploited since 2013 by NCB.

In 2014, a version of *SECa-BuG* was made available for operation by ***AGX-TRANSPRESERV,*** and a contract for the protection of intellectual property and non-disclosure between the parties (NDA) was signed. Recently (2017), NCB became aware that ***TRANSPRESERV*** not only copied the equipment, generating a first version, but also commercially operated the SECa-BuG equipment without the knowledge of NCB. Another company, ***MTB SERVIÇOS AÉREOS ESPECIAIS,*** in partnership with ***TRANSPRESERV*** developed a second version of the equipment similar to that proposed by SECa-BuG, being commercialized on specific sites (e.g. ***DRONECENTER).*** In this context, the proponent no longer has information on such equipment and cannot state whether patents have been submitted by these companies. However, they should be mentioned as equipment that produced some commercial results of the state of the technique. This issue is being settled in court by NCB with those responsible for these companies.

More recently, due to the innovations of this market and due to the characteristics of the paid payload to be released, proposals for the use of Remotely Piloted Aircraft, also known as Unmanned Aerial Vehicle (UAV) or drones, as ameans of aerial releases have also been found. Abroad, drone release tests are somewhat old, but started more strongly at the end of 2015 and recently, figure between the main releasing means.

The vast majority of solutions report experimental cases with adapted systems and low autonomy. ***YONG-LAK*** performed successful tests with an UAV, delivering biological control "bombs". Each cardboard bomb contains several compartments with the parasitized eggs inside, allowing a large amount to be released when firing at specific points. The system proposed by ***YONG-LAK*** consists of a radio-controlled helicopter coupled with a device for storing and launching these bombs. The german company ***HEIGHTTECH*** has adapted and tested a release system on its drones. He used a plastic bottle to store the parasitized eggs and a simplified system to continuously spray them during the flight. There is no information on patents and business operations of both solutions. The Italian company ***SPORT TURF CONSULTING*** carries out commercial releases from a system based on spherical capsules, containing the parasitized eggs inside. This device stores the capsules, shooting at specific points according to previous planning. The italian companies ***SOLEON*** and ***AERMATICA3D*** have developed similar capsule launch devices. Canadian company ***ANATIS BIOPROTECTION***, a manufacturer of biological agents, conducted tests with a capsule launcher device and a standard storage compartment for the release of loose parasitized eggs with Trichogramma in 2017. It compared the two methodologies and proved the technical feasibility of both, directly in the field. ***KOPPERT*** has a mechanized device for the release of its proprietary capsules containing parasitized eggs with Trichogramma inside ***HUNTER.***

Patents of these devices were not found.

In 2015 in Brazil, **XFLY developed** a releaser for loose eggs in the shape of a rotating sphere, coupled at the bottom and sold exclusively with its line of drones, called the X800 BIO. The eggs are placed inside the sphere and, with their rotation, they are released continuously, similar to an endless thread. It was mentioned that this system was patented, however there is no knowledge of the number and the holder. The service provider ***GEOCOM*** operates the ***XFLY*** product to release loose parasitized eggs. In mid-2016, ***AEROAGRI*** developed a simplistic solution, based on an endless thread, coupled to the bottom of the DRONE Phantom 4, from Chinese manufacturer DJI. This solution also allows the continuous release of loose eggs, but without any control.

Also in 2016, ***ENGEGROW*** integrated into its portfolio a releaser based on a rotating sphere, similar in operation to that of ***XFLY.*** There is no knowledge about patents submitted by both companies.

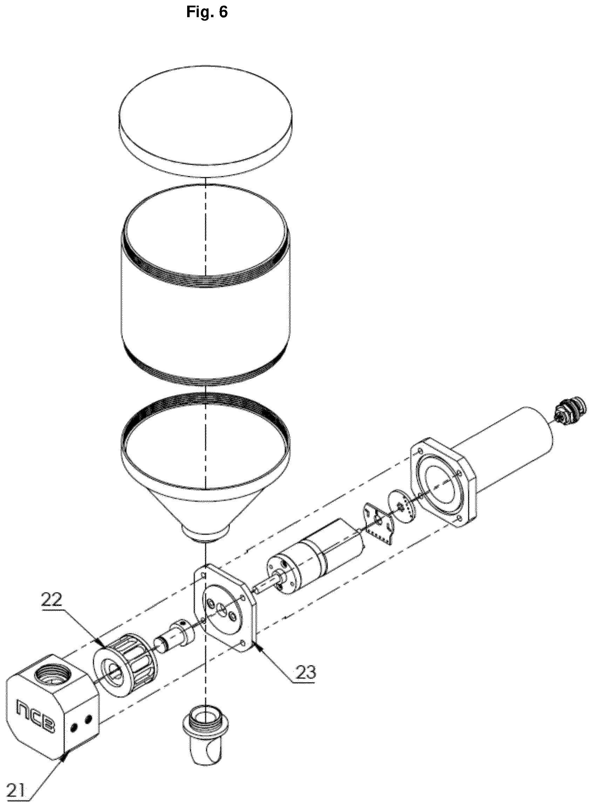

The NCB solution for automating the release of loose parasitized eggs, such as loose eggs parasitized with Trichogramma galloi, is the *BioBOT* releaser (20 - illustrated in FIGURE 1), evolution of SECA-BuG. It will be installed preferably in drones (100), as described in FIGURE 5A and claims of FIGURE 6 (21, 22 and 23). *BioBOT* is the trademark of this NCB product.

### 2- Evaluation of commercial machines and products for automated release of masses (e.g. biological agent Cotesia flavipes)

As previously presented, the release of Cotesia is still predominantly performed manually through the deposition of plastic cups after its birth. The mechanized release formats of Cotesia use the same principle and are also always oriented in the encapsulated format and always after the birth of insects. There are no machines that perform the dosage, separation and release of the loose masses before birth, object of this patent.

As previously presented, the release of Cotesia is still predominantly performed manually through the deposition of plastic cups after its birth. The mechanized release formats of Cotesia use the same principle and are also always oriented to the encapsulated format and always after the birth of insects. There are no machines that perform the dosification, separation and release of the loose masses before birth, object of this patent.

Recently some companies in Brazil and abroad have developed equipment with the aim of mechanizing the release of Cotesia. In 2015, one of the first companies, ***GEOCOM,*** initially developed a device to load, manipulate and release small cardboard boxes. This box was developed to commercialize, transport and release Cotesia with drones (this box is the subject of a third-party patent). The mechanical device is based on several racks attached to the drone, where closed boxes are stored and stacked. The device creates an opening (performs a "hole") and releases one by one as the drone advances. Recently, this same company evolved its mechanized system to store and release cardboard tubes in order to increase the storage capacity in the drone and extend the operating autonomy. The tubes are also patented. At the moment, the numbers of patents submitted for these mechanized devices were not found. The company ***ONE SOLVE,*** presented at the Agrishow fair 2018 a system similar to that of ***GEOCOM.*** However, the system used a systematic similar to manual release, because in its rack were stored and stacked the plastic cups. These cups are released one by one mechanically after creating an hole for insect exit.

As evolution, ***AGRIBELA*** developed a biodegradable spherical capsule to commercialize, transport and release Cotesia. This capsule is the subject of patent by the company. In partnership with ***AGRIBELA, ARPAC*** developed the mechanized releaser of these capsules, which coupled to the drone, allows the autonomous and georeferenced release of Cotesia.

Recently, the company ***SARDRONES,*** developed an automated system for the release of Cotesia, based on the commercialization of biodegradable saches. This technique allows a greater environment to insects due to the better contact of insects born with the environment. This procedure has also been patented.

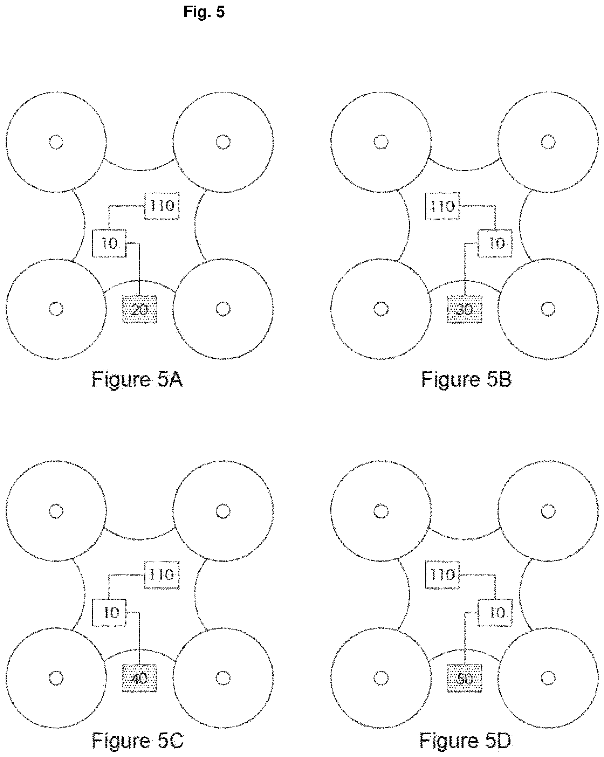

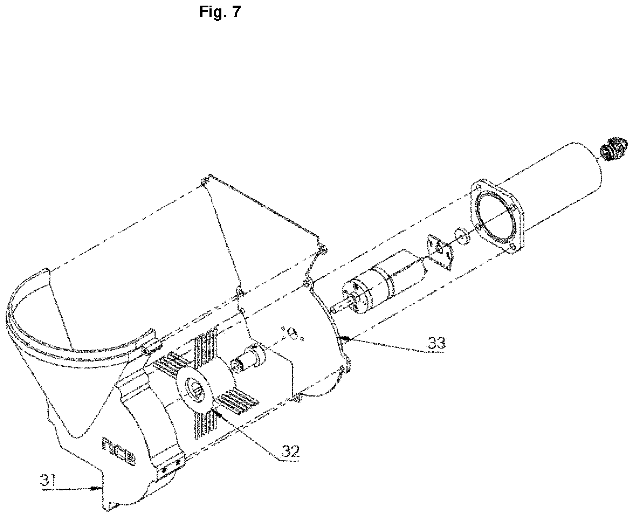

The solution of NCB to automate the release of loose masses before the birth of wasps, such as the wasp Cotesia flavipes with the addition of repellent, is the releaser *BioCOTe* (30 - illustrated in FIGURE 1). It will preferably be installed in drones (100), as described in FIGURE 5B and claims of FIGURE 7 (31, 32 and 33). *BioCOTe* is the registered trademark of this NCB product.

### 3- Evaluation of commercial machines and products for automated release of alive mites (e.g. biological agent Neoseiulus californicus)

The release of mites is always carried out with the alive biological agent. To date there are no commercialization, transportation and release techniques that enable the operation in other formats.

For the release of predatory mites in the field, these organisms are usually packed in plastic or cardboard bottles containing inert material (rice husk, crushed corn cob or vermiculite). In addition to facilitating the distribution of predators in the field, the use of this material is also important to allow the survival of mites during transport. Usually the bottles used for this purpose have a hole in the lid, which is sealed with "voil" tissue or non-woven tissue (TNT), allowing gas exchange and ventilation of the internal contents of the bottle during transport, which is usually carried out using polystyrene thermal boxes. During transport the bottles should remain horizontally within the polystyrene boxes, this to increase the area useful for predators, avoiding cannibalism ***POLETTI.***

The most common procedure currently used for its release, similar to other inputs, is the manual. For the distribution of these predators, it is recommended that each bottle be shaken, to homogenize their distribution in the contents of the package. Soon after, the bottle should be opened cautiously and its contents distributed directly on the plants or in the soil. Predatory mites can also be distributed in the field in saches which are hung on plants.

European biological control companies have used this type of packaging most commonly in greenhouses. When these packages are distributed in the field, a small opening allows predators to leave. This process is usually slow and may take weeks ***POLETTI.***

There are some commercial alternatives for the mechanized distribution of these mites in greenhouses and in the open field. ***KOPPERT*** developed a system for manual distribution ***ROTABUG*** and a machine for mechanized distribution, ***AIROBUG.*** This machine uses the rails of the infrastructure available in the greenhouses to move between the crop, releasing above the canopy of the plants. It uses a purely mechanized system based on large fans to "blow" the material.

A miniaturized version using the same distribution procedure, the ***MINI-AIRBUG*** was developed by the same company in pistol format. In it, the bottles are coupled to the gun and the device "sprays" the mites based on the gun drive and consequently the associated fan. With this device, employees can perform manual release not only in greenhouses, but also in the open field. Recently, ***KOPPERT*** developed a device to be coupled to DJI's MATRICE 600 DRONE. The device is based on a rotating cylinder that allows storage and release through small holes to measure its rotation.

Student Michael Godfrey of the University of ***QUEENSLAND*** developed in 2015 a mechanized device coupled in a multirotor drone to release the Neoseiulus mite. A 2-liter plastic bottle has been adapted to an endless thread for the storage and release of mites. The main factor raised in the study was the concern to control the volume of distributed agents, of paramount importance for the efficiency of biological control. No patents related to the subject were found.

Australia's ***AEROBUGS*** has developed a mite releaser equipment coupled to a DJI M600 DRONE. The equipment is based on a dedicated compartment with centralized bottom output. In the output is coupled a device for mechanized release.

Recently, ***GEOCOM*** has applied the same Trichogramma release device manufactured by ***XFLY,*** previously described, for the release of mites. However, in general, the release of predatory mites has been concentrated in mechanized solutions, manual and of little automation and integration with drones.

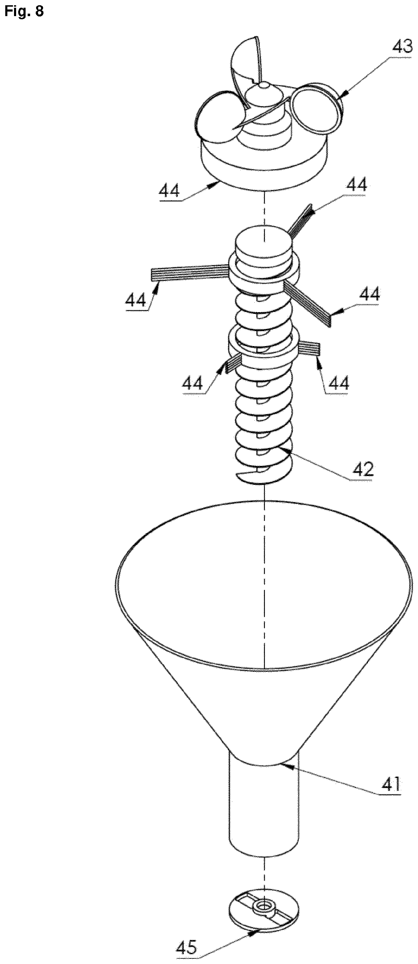

NCB's solution for automating the release of alive inputs, such as the Neoseiulus californicus mite with vermiculite inert material, is the *BioMITe* releaser (40 - illustrated in FIGURE 1). It will preferably be installed in drones (100), as illustrated in FIGURE 5C and claims of FIGURE 8 (41, 42, 43, 44 and 45). *BioMITe is* the registered trademark of this NCB product.

### 4- Evaluation of commercial machines and products for automated release of fungi in powder form (e.g. biological agent Beauveria bassiana)

Currently, the release of fungi is carried out in liquid form. Fungi are diluted in a mixture with water, which may or may not include other liquid inputs, at the exact moment of release. As liquid spraying is already of the state of knowledge and technique, the main sprayer equipment can be used for automated and precise controlled release, including equipment subject to patent BR1020140117938, owned by the NCB holder.

In this context, the development of a new equipment for automation, control and release of fungi in the powder format is also shown as an innovation in the biological control market.

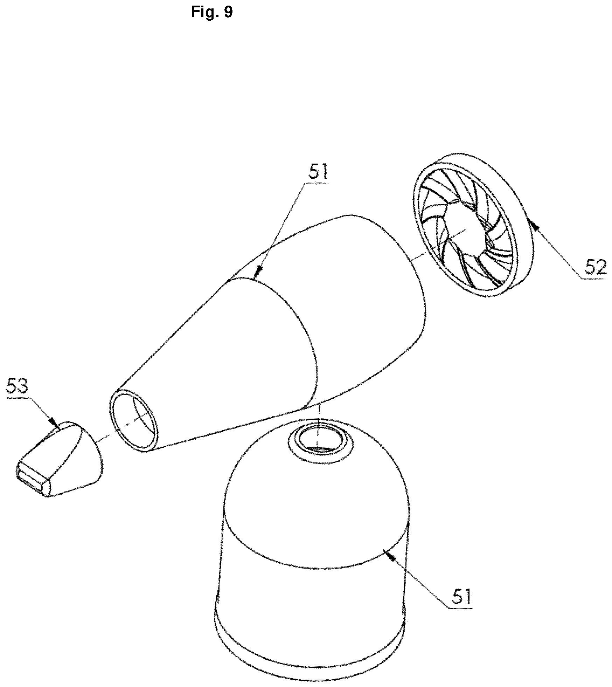

NCB's solution for automating the release of fuing into powder format, such as Beauveria bassiana, is *the BioFUNgus* releaser (50 - illustrated in FIGURE 1). It will preferably be installed in drones (100), as illustrated in FIGURE 5D and claims of FIGURE 9 (51, 52 and 53). *BioFUNgus* is the registered trademark of this NCB product.

### 2) INHERENT PROBLEMS IN CURRENT TECHNIQUES

Although it already occupies its space in the field, the main problem faced by biological pest control is the manual release process (illustrated by FIGURE 2), which generates a low efficiency in time and accuracy, and consequently limits access to large areas.

The problem begins when, in general in order to ensure coverage of an area, employees need to manually distribute the biological inputs.

This coverage is limited to small areas configuring a labor intensive process that requires a very large number of employees. Because it is a manual process, this procedure is unfeasible in large-scale releases and consequently does not offer greater accuracy and control in the releases.

Additionally, the unfeasibility of large-scale releases makes it impossible for biological control and its associated technologies to reach the level of precision and traceability for their professionalization and prevent the taking of space more quickly in the face of the application of agricultural pesticides. The environmental benefits of sustainable biological control through manual releases can be very little explored compared to the efficiency of autonomous and controlled releases through motor vehicles or drones, for example.

Considering the release systems currently available to competitors, mechanization has brought important advances and a major advance in scale gains.

However, these mechanized systems do not allow control of the release rate or neither offer integrations with digital mission planning systems and tracking systems. The result is a dosage that is difficult to adjust and often inadequate to the intended purpose, in addition to offering little transparency in reports sent to contractors. Any variations in vehicle speed, whether by operator's command or environmental operating conditions, directly reflect the efficiency of the aerial release.

In the evaluation of competitors, their equipment does not allow the releasing rate to be controlled and does not allow 100% digital planning of the areas.

This feature makes that some regions of an area receive excess amount of releases while others receive releases below the necessary. Areas identified as failures or with low release should be reevaluated and additional releases should be considered undermining the credibility of operations. The release process should be repeated more than once according to the phenological stage of the crop and the type and amount of infestation evidenced. Therefore, any rework results in more expenses with operation and biological agents control, without considering the fact that it increases the risk of intraspecific competition occurring (condition when the flood of insects impairs biological control due to the fact that they are in a saturated environment and insects compete with each other) reducing efficacy. Releases of these inputs in quantities different from the recommended ones may result in failure of control.

### 3) ANALYSIS OF THE INVENTION FROM BRIEF COMPARISON WITH CURRENT TECHNIQUES

Scale farming in the current scenario is dependent on the use of technology to measure accuracy not only to applications related to biological control, but also to all other procedures related to monitoring, planning and planting.

The planted areas require efficiency and uniform releases of the inputs through the use of specialized vehicles such as motorcycles, tractors, agricultural aircraft or drones, and the traditional manual process is not feasible, such as the vastness of the area of application.

The advent of global positioning receivers (GPS) came to measure higher accuracy to the procedure, through the planning, monitoring and guidance of the operator on the release area and, after the end of the procedure, evaluation by the agronomist of the result obtained through generated reports.

For a good result, a robust, accurate and fast computing system is required to assist in planning and especially in the monitoring of the process. The environment in which it applies requires fault-tolerant, robust and superior durability equipment.

It is also common knowledge that a good digital planning of the areas, assisted and integrated to the configurations available for each releaser and for each application of this, increases efficiency and accuracy and considerably reduces the areas of failure in the release. The early calculation of better routes, optimal curves and relevant factors such as climatic conditions, speed, height in relation to the ground, inclination, among others, allow the process to be controlled from end to end. Considering the large number of variables involved in the calculation process with greater precision, it becomes evident the need for modern, accurate equipment with greater computational capacity, which makes the whole process more efficient. All these variables can be configured and are unique features of multipurpose electronic equipment (10 - FIGURE 1) to operate in a customized manner with each releaser individually or simultaneously. Configurations are performed in the *BioMAP* mission planner application (it is the trademark of the NCB mission planner) for mobile devices (70) and/or in the *BioHUB* cloud management system (it will be the registered trademark of NCB for the management system) in desktop computing system (90).

In general, while the manual release process creates a lot of difficulties both to scale the releases and to the reliability of the process, the mechanized equipment and its low automation do not present the precision and control necessary for optimized operation. Agronomic techniques and calculation algorithms cannot be widely implemented for an optimized operation focused on the individual reality of each user (personalization), making this approach impossible when talking about precision biological control.

The present invention reports software systems, applications, hardware and releasers (a multipurpose embedded system) used in the automation of the process of releasing biological agents, mainly, but not restricted to, pest control using drones as vehicle standard.

The present invention uses computational techniques to seek improvement in the overall efficiency of the integrated product that provides the automation of the process of releasing biological agents in an individual way or combined with more than one input at the same time.

The way found to carry it out was the use of the latest market technologies, some developed 100% in a pioneering way by NCB with support from research and development projects supported by the Fundação de Amparo a Pesquisa do Estado de São Paulo - FAPESP and the Conselho Nacional de Desenvolvimento Científico e Tecnológico - CNPq.

Hardware was designed with high-performance embedded processors (10), modern cloud-based computational development technologies, computer systems for customer registration, management, automatic billing, reporting, dashboard indicators and customized georeferencing mission planning applications (google earth maps) dedicated to precision biological control for mobile devices, such as smartphones and Tablet PCs (70 and 90).

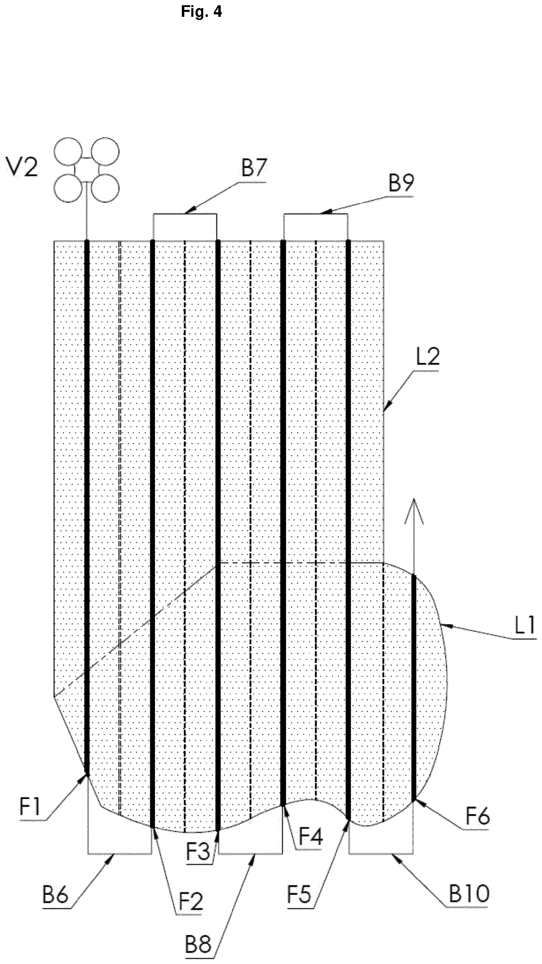

Techniques include digital route calculation integrated with dosification calculation for greater efficiency, definition of waypoints, definition of exclusion and danger areas and complete mapping of the area in digital format. Thus, the adversities presented in the state of the technique are overcome and open possibilities for specific improvements and fine adjustments that allow improved efficiency and automation of the release process, always ensuring the use of the most modern in terms of agronomic techniques specific to each crop. As a way of better defining state-of-the-art results, FIGURE 4 generally illustrates the procedures adopted with the new multipurpose embedded system taking as an example standard a drone (V2), where biological agents can be released at the calculated rate for each biological input and for each releaser individually or simultaneously (installed on the same drone), controlled by GPS precisely according to the dosification and digital planning of the total area (L1+L2), the lines (F1, F2, F3, F4, F5 and F6) indicate the parallel paths where the release should take place, automatically calculated by the software system for higher throughput and the lines (B1, B2, B3, B4, B5, B6, B7, B8, B9 and B10) illustrate the drone's returns ("balloons"), which can be smoothed in digital planning automatically for higher yield. The dashed lines indicate the limits of the bands of action of biological inputs after their birth.

In this version all the release is tracked and followed in real time and all data is sent to the cloud management system for dashboard indicator generation, reporting and automatic billing.

In this context, comparing the technology of the present invention with the existing equipment, already introduced previously, the following differences are identified for each type of releaser:

### 1- Evaluation of commercial machines and products for automated release of loose parasitized eggs (e.g. biological agent Trichogramma galloi)

a) Patent of MAEDGEN (1981) "Method and Apparatus for Airbone Release of Insect Eggs" (No. 4,260,108);
   - Practical problems: the release is mechanized and the holes for adjusting the amount to be released is performed manually, there are low integration with electronic systems and little reliability in the procedure.
**b)** Product of ***AGX-TRANSPRESERV-MTB SERVIÇOS AÉREOS ESPECIAIS.***
   - Practical problems: the developed releaser is very similar to the principle of operation of *BioBOT,* having been developed its first version based on it. The second version was developed by the same group, also very similar to *BioBOT.* However, both versions did not allow control of the release rate and there was no reliability and traceability of the releases. It was reported at the time by customers the low accuracy and reliability of the release reports.
   OBS.: ***AGX-TRANSPRESERV-MTB SERVIÇOS AÉREOS ESPECIAIS*** were partners of the same economic group. All these companies have gone off the market and no longer offer services with the equipment "copied" from NCB products.
**c)** Company product: ***SPORT TURF CONSULTING, SOLEON, AERMATICA3D, ANATIS BIOPROTECTION*** and ***KOPPERT.***
   - Practical problems: the developed releaser is based on a capsule release system. The mechanized release of capsules configures an inaccurate release and is unscalable, since a large volume is needed to meet large areas. By increasing the volume of the compartments, efficiency and autonomy of the drone are impaired. Additionally, it has been reported that encapsulated release generates predation in the field, i.e. the accumulation of biological agents in single points can generate mobilization of predators.
**d)** Product of the companies: ***XFLY-GEOCOM, AEROAGRI*** and ***ENGEGROW.***
   - Practical problems: the releasers of these companies are mechanized, based on the concept of endless thread. Mechanized release is not very precise, impairing the coverage of areas and resulting in poorly homogeneous releases.
Low integration and the lack of control based on digital georeferencing do not allow integrated reporting, making releases untransparent to the user.

The **multipurpose embedded system object of the present invention,** configured for operation with the *BioBOT* releaser, has the following innovations:
1) The releaser operates in an automated and integrated manner with GPS, being possible to control the release rate of loose parasitized eggs in milliliters per hectare in a precise manner;
2) The releaser produces homogeneous distributions over the entire area;
3) The efficiency and accuracy of the releases are excellent, that is, there is a guarantee that biological agents are released rationally and appropriately to the treatment of the area;
4) It is possible to make digital planning of the areas to be treated using the best agricultural techniques, enabling the configuration and taking into account all control variables while accessing all releasing data and coverage of the areas;
5) With a 100% digital process, it is possible to use cloud-based computing systems to generate indicators, automatic billing and reliable release reports, as well as traceability of the entire process from production to release; and
6) The release of loose parasitized eggs has already been scientifically proven. It is perfectly suited for the service of large areas, ensuring the scalability of the process.

### 2- Evaluation of commercial machines and products for automated release of alive wasps (e.g. biological agent Cotesia flavipes)

**a)** Product of *GEOCOM.*
   - Practical problems: the developed releaser is based on a capsule release system. The mechanized release of capsules configures an inaccurate release and is unscalable, since a large volume is needed to meet large areas. By increasing the volume of the compartments, efficiency and autonomy of the drone
   are impaired. In this system, the capsule is released only after the wasps have been born. In this way the equipment inserts a hole as the capsules are released into the field. Some difficulties were evidenced with this system, such as the inability of the farmer to audit whether the wasps were born before release and whether they were properly packed for transport. Other problems inherent to this technique are the costs for packaging production and its assembly time (it has been reported that each package takes on average 1 minute to assemble).
**b)** Product of the company ***ONE SOLVE.***
   - Practical problems: the developed releaser is based on a system of release of plastic cups. The mechanized release of these cups is also little accurate and unscalable, since a larger volume is needed to meet large areas. The problems of this technique are similar presented in the solution proposed by ***GEOCOM,*** but there is an aggravating factor, plastic cups are released into the environment resulting in sustainability problems.
**c)** Product of ***AGRIBELA-ARPAC.***
   - Practical problems: the developed liberator is based on a system of release of biodegradable spheres. The mechanized release of these spheres is also not very precise and unscalable, since a larger volume is necessary to meet large areas. The problems of this technique are similar presented in the solutions proposed by ***GEOCOM*** and ***ONE SOLVE,*** but there is a relevant detail, the spheres need manufacturing process to be assembled which increases their production time and higher costs.
**d)** Product of the company ***SARDRONES:***
   - Practical problems: the developed liberator is based on a system of release of biodegradable saches. Solved some relevant problems, such as, ease of the farmer auditing the birth of wasps before release, greater adaptation of wasps to the environment and are easier to assemble and transport.

However, the mechanized release of these sachets is also poorly accurate and unscalable, as a larger volume is needed to serve large areas.

The **multipurpose embedded system object of the present invention,** configured for operation with the *BioCOTe* releaser, has the following innovations:
1) The releaser operates in an automated and integrated manner with GPS, being possible to control the separation and release rate of the loose masses in milliliters per hectare in a precise way;
2) The releaser produces homogeneous distribution over the entire area;
3) The efficiency and accuracy of the releases are excellent, that is, there is a guarantee that biological agents are released in a rational and appropriate way to the treatment of the area;
4) It is possible to make digital planning of the areas to be treated using the best agricultural techniques, enabling the configuration and taking into account all control variables while accessing all releasing data and coverage of the areas;
5) With a 100% digital process, it is possible to use cloud-based computing systems to generate indicators, automatic billing and reliable release reports, as well as traceability of the entire process from production to release;
6) It is possible to carry out more easily the audits of the birth of wasps;
7) Eliminates any manufacturing step for packaging assembly, speeding up production time and facilitating packaging and transportation; and
8) The release of loose masses has already been scientifically proven. It is perfectly suited for the service of large areas, ensuring the scalability of the process.

### 3 - Evaluation of commercial machines and products for automated release of alive mites (e.g. biological agent Neoseiulus californicus)

**a) *KOPPERT's*** products.
   - Practical problems: both the machine that operates on rails in greenhouses, and the manual release system are based on forced ventilation, so that biological angents are "blown" above the canopy of plants. Despite being functional, it is based on a mechanized system that does not allow accurate release rate control. The most recently developed product for drones uses a mechanized rotating cylinder. The system promotes release through specific points. Therefore, in all solutions it is not possible to control the rate accurately and the need to define specific points limits the reach to large areas.
**b)** Product of ***AEROBUGS.***
   - Practical problems: the releaser of this company is mechanized, based on the concept of endless thread. The mechanized release is not precise, impairing the coverage of large areas and resulting in poor homogeneous releases. Low integration and the lack of control based on digital georeferencing do not allow integrated reporting, making releases untransparent to the user.
**c)** Product of ***GEOCOM.***
   - Practical problems: the same device manufactured by ***XFLY,*** which ***GEOCOM*** uses to release loose parasitized eggs, is used to release alive mites in crops. Therefore, the same problems previously presented for this equipment are reported for the release of mites.

The **multipurpose embedded system object of the present invention,** configured for operation with the *BioMITe* releaser, has the following innovations:
1) The releaser operates in an automated and integrated manner with GPS, being possible to control the release rate in milliliters per hectare in a precise manner;
2) The releaser produces homogeneous distributions over the entire area;
3) The efficiency and accuracy of the releases are excellent, that is, there is a guarantee that biological agents are released rationally and appropriately to the treatment of the area;
4) It is possible to make digital planning of the areas to be treated using the best agricultural techniques, enabling the configuration and taking into account all control variables while accessing all releasing data and coverage of the areas;
5) With a 100% digital process, it is possible to use cloud-based computing systems to generate indicators, automatic billing and reliable release reports, as well as traceability of the entire process from production to release; and
6) The release of alive mites packed in inert material has already been scientifically proven. It is perfectly suited for the service of large areas, ensuring the scalability of the process.

### 4- Evaluation of commercial machines and products for automated release of the agent Beauveria Bassiana

Currently, the fungi release procedure involves two processes. The first concerns the production of the mixture where water is mixed with the fungus in the form of powder. The second concerns the spraying machines that can release the liquid input.

The spraying of liquid inputs is of the state of knowledge and technique and several innovations are available in equipment on the market. One such equipment is the flow controller, patent submitted on behalf of the owner of NCB number BR1020140117938.

The main practical problem of liquid spraying is the large volume of payload that vehicles must carry (carried out primarily with agricultural aircraft and very large drones) and, in this sense, powder-format releases could be carried out with the most affordable drones and at lower costs.

The **multipurpose embedded system object of the present invention,** configured for operation with the releaser *BioFUNgus,* has the following innovations:
1) The releaser operates in an automated and integrated manner with GPS, being possible to control the release rate of loose parasitized eggs in milliliters per hectare in a precise manner;
2) The releaser produces homogeneous distributions over the entire area;
3) The efficiency and accuracy of the releases are excellent, that is, there is a guarantee that biological agents are released rationally and appropriately to the treatment of the area;
4) It is possible to make digital planning of the areas to be treated using the best agricultural techniques, enabling the configuration and taking into account all control variables while accessing all releasing data and coverage of the areas;
5) With a 100% digital process, it is possible to use cloud-based computing systems to generate indicators, automatic billing and reliable release reports, as well as traceability of the entire process from production to release; and
6) The powder release will still be the object of study, but it is perfectly suitable to supply the needs of large areas with lower costs, allowing the use of lighter drones.

### 4) PROPOSALS AND OBJECTIVES OF THE PRESENT INVENTION

To characterize the impacts and the opportunity in which the project is part, sugarcane is taken, with approximately 9.3 million ha harvested in 2017 ***IBGE.***

Currently in Brazil, there are no chemical options with specific records for the control of sugarcane borer *(Diatraea saccharalis).* However, examples of compatible chemicals are the Certero of Bayer Cropscience and Diafuran 50 of Arysta Lifescience with environmental classification of dangerous and very dangerous respectively ***CRUZ.*** Considering Certero, one of the main insecticides recommended for treatment, the application should be performed at the beginning of infestation, when the sugarcane borers are small and with up to 3% intensity of infestation. Due to the phenological stage of the crop when the pest occurs, the application occurs only through the provision of aerial spraying services, for example agricultural aviation. With an average total operating cost of R$35.00/ha per application of this chemical (4 applications are required), without considering the cost of the chemical, and considering a rate of use of agricultural aviation of 25%, according to ***SINDAG*** and ***PULVERIZADOR***, for treatment, it is estimated a point market cost with the provision of insecticide application services of approximately R$ 325.5 million only in sugarcane (9.3mha x 25%AG x R$35/ha x 4 sprays).

Faced with this reality, taking the same sugarcane borer as an example, basically, biological control is carried out through the release of loose parasitized eggs with Trichogramma. There are approximately 300,000 ha treated by BUG agentes biológicos company with the cards only in this culture (4 releases are also required), at an average total cost of R$36.00/ha. Considering the same condition, only with the service of this area is estimated a market with the provision of air release services of approximately **R$ 10.8 million** (0.3mha x 25% x R$36/ha x 4 releases).

In this context, this scenario illustrates the growth potential of aerial releases related to precision biological pest control and the need to increase efficiency through tools that enable access to large areas.

This is a new and growing market in Brazil and worldwide.

It is a goal the growing pressure for more sustainable procedures to enter more demanding markets, since the vast majority of chemicals have a restrictive classification. It is estimated the initial reduction of 20% in the use of these chemicals and that the areas treated in this crop will be doubled in the first year.

It is a goal to use drones with the multipurpose embedded system and its releasers *BioBOT, BioCOTe, BioMITe* and *BioFUNgus* in autonomous aerial releases, replacing the definitive manual procedure and to mitigate the problems presented with the operation of motorcycles, agricultural aircrafts and mechanized systems of competitors. It is also intended that the use of drones has operational costs compatible with the payload paid for it.

It is a goal to optimize and economy in several areas. It relates below the comparisons and benefits when using the system of the present invention, from the scenarios shown above:
- **Economic Comparison:**
   - Cost of employees X Cost of equipment:
      Without the system of the present invention: R$ 8.00 per hectare (on average 20 employees are used to meet 1 ha);
      With the system of the present integrated invention: R$ 10,00 per hectare (1 collaborator is used to meet 40 ha);
   - Current area production X Automated area production:
      Without the system of the present invention: 300,000 hectares;
      With the system of the present integrated invention: 600.00 hectares (100% increase in the service of the areas in the first year);
   - Use of current chemicals X Use of chemicals with enlargement of the biological ocntrole:
      Without the system of the present invention: R$ 325.5 million.
      With the system of the present integrated invention: R$282.8 million (Reduction of 20% of the use of chemicals in 2 years with the growth and access to larger scales of precision biological control).
- **Coverage Time:**
   - Employees time X Time of automated process:
      Without the system of the present invention: 6 hectares per man-hour (on average 20 employees are used to meet 1 ha).
      With the system of the present invention integrated: 80 hectares per hour (considering a drone speed of 50km/h and a range of 30m).
- **Releasing:**
   - Manual / mechanized X Atonomous and integrated:
      Without the system of the present invention: manual or mechanized release without precision;
      With the system of the present invention integrated: automated release, controlled by GPS and tracked;
   - Fixed release rate X Controlled release rate:
      Without the system of the present invention: there is no accuracy of the releasing rate and the quantity released;
      With the system of the present invention integrated: accurate control of the releasing rate in milliliters per hectare based on GPS;
   - Manual / mechanized efficiency X Automated efficiency:
      Without the system of the present invention: low efficiency with little control of the releasing rate and instraspecific competition;
      With the system of the present invention integrated: optimal releasing rate, automation and increased adoption of biological control;
- **Environmental:**
   - Environmental hazards X Sustainable processes:
      Without the system of the present invention: environmental contamination due to the risks of classification of insecticides;
      With the system of the present integrated invention: reduction of environmental hazards with the increased use of biological control;
- **Security:**
   - Manual / mechanized procedure X Automated procedure:
      Without the system of the present invention: jam, fall of motorcycles and low work safety;
      With the system of the present invention integrated: drone with digital mapping of the area with work safety;
- ***Full-compliance:***
   - Low transparency X Traceability:
      Without the system of the present invention: low integration with uncertainties of area coverage and inaccurate release reports;
      With the system of the present invention integrated: high integration with software systems, digital mapping, automatic billing and generation of accurate releasing reports.

Technically, the system under the present invention is based on the technological evolution of high-performance embedded computers, specifically complex cloud computing systems that can be based on artificial intelligence, smartphones and tablet robust PCs, and which are capable of evaluating situations and parameters that manual release and existing mechanized products cannot.

The adoption of cloud-based computing systems and more efficient, interactive and faster smartphones and Tablets allowed the use of modern methodologies of computational development, such as specific frameworks of precision measurement to the GPS device, use of object-oriented programming languages, relational and non-relational databases and simplified and easy-to-assimilate operating interfaces, so that digital integration and control were considerably improved in relation to state of the technique products.

The measurement of different digital areas integrated with automated computing and control of the releasers by the embedded system, within the same physical rural property, implemented in the invention, allows an intelligent planning of the releasing process, defining different standards for each area and for each releaser, individually, so that the total planning of the operation is done in order to improve the operation as a whole and not by parts. The definition of such areas also allows the exclusion of areas that are not interesting for the releasing, so that the system calculates based also on these parameters routes optimized to perform optimal coverage with the route also optimal.

The invention aims to offer a simplified configuration system through a smartphone, Tablet or PC application through a cloud software system, in which the user must fill in the values, one at a time, avoiding configuration errors. Based on these values the areas will be calculated automatically and the coverage and optimized routes will be presented to the user in the mission planner.

It also aims to offer an equipment that controls the releasing rate of biological agents through a similar operating methodology for all releasers with electromechanical system that controls the volume release flow, in milliliters per hectare.

It also aims to provide the operator with information about the situation of the crop at the time of release, such as wind direction and speed, temperature, relative humidity, and inform and/or apply the best adjustments of the release parameters for that moment.

Another purpose of the invention is to offer an equipment capable of using georeferenced map images in conjunction with geographic location (GPS) devices for visual measurement of relevant areas and elements, presented to the operator during release, integrated with calculations for optimal release rate.

It also aims to offer an equipment capable of recording and generating real data for the generation of reports of the real releases made, performing relevant calculations for the measurement of the process, such as total area traveled, total area released (sprayed), path traveled, total input consumed, operating time, information of the status of the vehicle used (e.g. all information of the drone), among other interesting statistics for monitoring and relevance to the operator. Such reports can be customized by the operator himself in formats that are more convenient and logical for monitoring. They will be automatically generated in a cloud-based software system, along with billing for customer payment area. The inclusion of logos, customer data, formatting and output file format were considered in order to make dispensable the collection of the releasing information manually after receipt or preparation of reports manually, avoiding fraud.

Thus, it aims to provide an automatic control equipment of motors and actuators that, in an integrated way with other components, particularly software and hardware, allows the automation of the releasing process with a focus on precision biological control.

It also aims to provide equipment that can collect relevant operating information and store it for further validation, either for performance evaluation purposes or for the purpose of generating indicators. The data collected include, but are not limited to, height, speed, direction, vertical displacement, horizontal displacement, longitude and latitude positions, engine status, releasing rate, aircraft or vehicle in operation, input used, number of hours of operation, date and time of events and latest operations performed on the equipment.

Finally, it aims to offer equipment that presents ease of configuration, use and modification of parameters (customization) specific to the culture to which it applies. The insertion of new techniques was contemplated, as well as the change of basic parameters of the system, such as colors, keywords, logos, system language, positioning, format and type of controls presented, as well as all the information presented to the pilot can be changed by a single user with system administration powers, making the use and understanding of the system easier by the user.

In a more complete version, for jobs requiring maximum accuracy under critical conditions and greater autonomy, the equipment will be supplied in its complete form, consisting of a multipurpose hardware system configured with two or more releasers at the same time, subject to individual and simultaneous controlled operation.

In a more simplified version, for jobs that require smaller areas, the equipment will be provided in a more economical form, consisting of a multipurpose hardware system configured with a releaser, capable of connecting to custom touchscreen interface rather than using a smartphone or Tablet.

For other situations, versions of the equipment which partially combine all the above-mentioned technologies and releasers are provided.

The novelty character in the present invention is related in the combination of the releasing technology and its multipurpose operation with different releasers with assistance from vehicles with geographic location technology (e.g. drones) and with the implementation in more modern computer systems that allow the application of recent techniques to release inputs and agronomic planning.

In all versions, the vehicle has chosen the function of transporting the multipurpose embedded system, the releaser(s) and inputs by or over the target location of the release.

The electromechanical set of the releasers, have the function of generating the desired volume of biological inputs, releasing them on the target for deposition through the action of gravity. Being equipped with flow control, it allows the release operation to be performed in constant correction adjustment improving the efficiency and deposition accuracy of biological inputs related to each releaser.

The computer program present in the system is the holder of innovation in the form of planning, monitoring and execution of the application. This program allows the delimitation of several different areas of application, the planning of optimal routes on these areas, which ensure total coverage with the shortest path traveled, without sacrificing the safety of maneuvers, control based on data computed by the concentration of input release taking into account external factors such as speed, height and ambient temperature. The regulation and fine adjustments of the system are made automatically, following measurements of the position and geographic displacement sensor (GPS) and sensors present in the releasers, through control hardware equipped with processors and algorithms of analysis and decision making, depending on parameters known by the input releasing technology. The durability of the equipment allows operation for longer working hours in the same day and in more adverse conditions, allowing it to operate on a greater number of days during the year.

### REFERENCES

[1] ALLEN, J.C.; e Gonzalez, D. Spatial attack patterns of Trichgramma pretiosum around release sites compared with a random diffusion model. Environmental Entomology, 1974, v. 3, n. 4, p. 647-652.
[2] BURBUTIS, P. P.; e Koepke, C. H.; European corn borer in peppers by Trichogramma nubbilale. Journal of Economic Entomology, 1981, v. 16, n. 2, p. 360-364.
[3] RIDGWAY; e Morrison, R. K.; Worldwide perspective on practical utilization of Trichogramma with special reference to control of Heliothis on cotton. Southwestern Entomologist, 1985, n. 8, p. 190-195.
[4] BIGLER, F.; Mass production of Trichogramma maidis Pint. et Voeg. and its field application against Ostrinia nubilalis Hbn. in Switzerland. Journal of Applied Entomology, 1986, v. 101, n. 1, p. 23-29.
[5] LOPES, J. R. S.; Estudos bioetológicos de Trichogramma galloi Zucchi, 1988 (Hym., Trichogrammatidae) para o controle de Diatraea saccharalis (Fabr., 1794) (Lep. Pyralidae). Dissertação de Mestrado, Piracicaba, ESALQ, 1988, 141p.
[6] NEIL, K. A.; e Specht, H. B.; Field releases of Trichogramma pretiosum Riley (Hymenoptera: Trichogrammatidae) for suppression of corn earworm, Heliothis zea (Boddie) (Lepidoptera: Noctuidae), egg populations on sweet corn in Nova Scotia. Canadian Entomologist, 1990, v. 122, n. 11-12, p. 1259-1266.
[7] PROKRYM, D. R.; Andow, D. A.; Ciborowski, J. A.; e Sreenivasam, D. D.; Suppression of Ostrinia nubilalis by Trichogramma nubilale in sweet corn. Entomologia Experimentalis et Applicata, 1992, v. 64, n. 1, p. 73-85.
[8] STINNER, R. E. et al; Parasitism of Heliothis eggs after field releases of Trichogramma pretiosum in cotton. Environmental Entomology, 1974,v. 3, n. 3, p. 497-500.
[9] SMITH, S. M. Methods and timing of releases of Trichogramma to control lepidopterous pests. Biological control with egg parasitoids, Wallingford: CAB International, 1994, cap. 6, p. 113-144.
[10] DOLPHIN, R. E.; Cleveland, M. L.; Mozing, T. E.; e Morrison, R. K.; Releases of Trichogramma minutum and T. cacoeciae in apple orchard and the effects on populations of codling moth. Environmental Entomology, 1972, v. 1, n. 4, p. 481-484.
[11] HASSAN, S. A.; Stein, E.; Dannemann, K.; Reichel, W.; Mass-production and utilization of Trichogramma: 8. Optimizing the use to control the European corn borer Ostrinia nubilalis Hbn. Journal of Applied Entomology, 1986, v. 101, n. 5, p. 508-515.
[12] HULME, M. A.; e Miller, G. E.; Potential for control of Barbara colfaxiana (Kearfott) (Lepidoptera: Olethreutidae) using Trichogramma spp. Trichogramma and other egg parasites: les trichogrammes et autres parasitoides oophages, 1986, p. 483-488.
[13] NEWTON, P. J.; Movement and impact of Trichogrammatoidea cryptophlebiae Nagaraja (Hymenoptera: Trichogrammatidae) in citrus orchards after inundative realeases against the false codling moth, Cryptophlebia leucotreta (Meyrich) (Lepidoptera: Tortricidae). Bulletin of Entomological Research, 1988, v. 78, n. 1, p. 85-99.
[14] ABLES, J. R.; Reeves, B. G.; Morrison, R. K .; Kinzer, R. E.; Jones, S. L.; Ridgway, R. L.; e Bull, D. L.; Methods for the field release of insect parasites and predators. Transactions of the ASAE, 1979, v. 18, n. 1, p. 59-62.
[15] GUSEV, G. V.; e Lebedev, G. I.; Present state of Trichogramma application and research. Trichogramma and other egg parasites: les trichogrammes et autres parasitoides oophages, 1986, p. 477-481.
[16] PINTO, A. de S.; Parra, J. R. P.; Oliveira, H. N. de; e Arrigoni, E. de B.; Comparação de técnicas de liberação de Trichogramma galloi Zucchi (Hymenoptera: Trichogrammatidae) para o controle de Diatraea saccharalis (Fabricius) (Lepidoptera: Crambidae). Neotropical Entomology, 2003, v. 32, n. 2, p. 311-318.
[17] PINTO, A. de S.; Comparação de técnicas de liberação e atuação de Trichogramma galloi zucchi, 1988 em infestações artificiais de Diatraea saccharalis (Fabr., 1794) prejudiciais a cana-de-açúcar. Tese de Doutorado, Piracicaba, ESALQ, 1999, 83p.
[18] PINTO, R. M.; Efeito de aplicações de spinosad associadas a liberações de Trichogramma spp. para o controle de Spodoptera frugiperda em milho destinado a produção de sementes. Conc. de Curso, Ribeirão Preto, Centro Universitário Moura Lacerda, 2004, 20p.
[19] YOKOJI, C. A.; Comparação de táticas de controle biológico de Spodoptera frugiperda (J. E. Smith, 1797) utilizando o prasitóide Trichogramma spp. em milho. Conclusão de Curso, Ribeirão Preto, Centro Universitário Moura Lacerda, 2005, 21p.
[20] ARCARO Filho, M.; Efeito da quantidade liberada de Trichogramma pretiosum no controle de Spodoptera frugiperda em milho safrinha. Conclusão de Curso, Ribeirão Preto, Centro Universitário Moura Lacerda, 2007, 19p.
[21] AFONSO Junior, V. A.; Número de liberações de Trichogramma pretiosum no controle de Spodoptera frugiperda em milho safrinha. Conclusão de Curso, Ribeirão Preto, Centro Universitário Moura Lacerda, 2008, 22p.
[22] SCANDIUZZI, G. F.; Efeito do número de liberações de Trichogramma pretiosum no controle de Spodoptera frugiperda em milho safrinha. Conclusão de Curso, Ribeirão Preto, Centro Universitário Moura Lacerda, 2007, 20p.
[23] GOMES, G.; Efeito da forma e do número de liberações de Trichogramma pretiosum no controle de Spodoptera frugiperda (J. E. Smith, 1797) em milho. Conclusão de Curso, Ribeirão Preto, Centro Universitário Moura Lacerda, 2007, 19p.
[24] SCHUTTE, F.; e Franz, J. M.; Utersuchungen Zur Apfelwickler-Bekampfung (Carposapsa pomonella L.) Mit Hilfe von Trichogramma Hartig. Entomophaga, 1961, v. 6, n. 3, p. 237-247.
[25] NORDLUND, D. A.; Lewis, W. J.; Gross, H. R.; e Harrell, E. A.; Description and evaluation of a method for field application of Heliothis eggs and kairomones for Trichogramma. Environmental Entomology, 1974, v. 3, n. 6, p. 981-984.
[26] JONES, S. L.; Morrison, R. K.; Ables, J. R.; e Bull, D. L.; A new and improved technique for the field release of Trichogramma pretiosum. Southwestern Entomologist, 1977, v. 2, n. 4, p. 210-215.
[27] GROSS, H. R.; Harrell, E. A.; Lewis, W. J.; e Nordlund, D. A.; Trichogramma spp.: concurrent ground application of parasitized eggs, supplemental Heliothis zea host eggs, and host-seeking stimuli. Journal of Economic Entomology, 1981, v. 74, n. 2, p. 227-229.
[28] HAJI, F. N. P.; Controle biológico da traça do tomateiro com Trichogramma no Nordest do Brasil. Trichogramma e o controle biologico aplicado, 1997, FEALQ, p. 319-324.
[29] HOPE, C. A.; Aerial release system for Trichogramma minutum Riley in plantation forests. The Ontario Project 1982-1986 - Memoirs of the Entomological Society of Canada 153, 1990, p. 38-44.
[30] SMITH, S. M.; e Wallace, D. R.; Ground systems for releasing Trichogramma minutum Riley in plantation forests. The Ontario Project 1982-1986 - Memoirs of the Entomological Society of Canada 153, 1990, p. 31-37.
[31] BARABASH, A. V.; For aerial distribution of Trichogramma. Journal Zashchita Rasteni, 1990, n. 8, p. 27.
[32] KIKU, B.; e Teshler, M.; The release of entomophages in capsules in vineyards. Second Simposium on Pesticides Application Techniques, 1993, p. 22-24.
[33] GARDNER, J.; Giles, K.; Mechanical distribution of Chrysoperla rufilabris and Trichogramma pretiosum: Survival and uniformity of discharge after spray dispersal in an aqueous suspension. Bio. Control, 1996, p. 138-142.
[34] PINTO, A. de S.; GARCIA, J.F.; OLIVEIRA, H.N. de. Manejo das principais pragas da cana-de-açúcar. In: SEGATO, S.V.; PINTO, A. de S.; JENDIROBA, E.; NOBREGA, J.C.M. de. (orgs.) Atualização em produção de cana-de-açúcar. Piracicaba: CP 2, 2006. p.257-280.
[35] PINTO, A. de S.; PARRA, J.R.P. Liberação de inimigos naturais, cap.19. In: PARRA; J.R.P.; BOTELHO, P.S.M.; CORRÊA-FERREIRA, B.S.; BENTO, J.M.S. (orgs.). Controle biológico no Brasil: parasitóides e predadores. São Paulo: Manole, 2002. p.325-342.
[36] MILLS, N. et al. Mass releases of Trichogramma wasps can reduce damage from codling moth. California Agriculture, v.54, n.6, p.22-25, 2000.
*[37]* MARTINS, J.F. de O. Predação de pupas de Trichogramma pretiosum em diferentes técnicas de liberação e eficiência da técnica de espalhamento de pupas no controle de ovos de lepidópteros no campo. 2010. 37f. Monografia (Trabalho de Graduação em Agronomia) - Centro Universitário Moura Lacerda, Ribeirão Preto, 2010.
[38] OLIVEIRA, H.N. de et al. Predação de ovos parasitados por Trichogramma pretiosum em duas formas de liberação no campo. In: SIMPÓSIO DE CONTROLE BIOLOGICO, 10, Brasilia, 2007. Anais... Brasilia: Embrapa Recursos Genéticos e Biotecnologia, 2007. (CD-ROM)
[39] FABBRIS Filho, C.C. Separação de "massas" em laboratório e predação de pupas de Cotesia flavipes na técnica de espalhamento de casulos em canavial. 2011. 40f. Monografia (Trabalho de Conclusão do Curso de Agronomia) - Centro Universitário Moura Lacerda, Ribeirão Preto.
[40] SISDELI, D.C. Predação de pupas de Cotesia flavipes liberadas para o controle de Diatraea saccharalis pela técnica de espalhamento de casulos em canavial. 2012. 35f. Monografia (Trabalho de Conclusão do Curso em Agronomia) - Centro Universitário Moura Lacerda, Ribeirão Preto, 2012.
[41] RODRIGUES, L.R.; VINHA, F.B.; PINTO, A. de S.; ROSSI, M.M. Avaliação do ácido tricloro-isocianúrico na repelência de predadores de pupas de Cotesia flavipes (Cam.) (Hymenoptera: Braconidae) espalhadas pelo solo na liberação aérea. In: CONGRESSO BRASILEIRO DE ENTOMOLOGIA, XXV, Goiânia, 2014. Anais... Goiânia: Embrapa Arroz e Feijão/UFG, 2014.
[42] VINHA, F.B.; RODRIGUES, L.R.; PINTO, A. de S.; ROSSI, M.M. Aspectos biológicos de Cotesia flavipes (Cam.) (Hymenoptera: Braconidae) após a aplicação do ácido tricloro-isocianúrico para a repelência de predadores para a liberação aérea. In: CONGRESSO BRASILEIRO DE ENTOMOLOGIA, XXV, Goiânia, 2014. Anais... Goiânia: Embrapa Arroz e Feijão/UFG, 2014.
[43] PADUA, V.B.C. Uso de repelentes de predadores em pupas de Cotesia flavipes (Hymenoptera: Braconidae) para a liberação aérea em cana-de-açúcar. 2016. 38f. Monografia (Trabalho de Conclusão do Curso de Agronomia) - Centro Universitário Moura Lacerda, Ribeirão Preto.
[44] PEDRAZZI, G. Mistura de repelentes de predadores em pupas de Cotesia flavipes (Hymenoptera: Braconidae) para a liberação aérea em cana-de-açúcar. 2017. 44f. Monografia (Trabalho de Conclusão de Curso em Agronomia) - Centro Universitário Moura Lacerda, Ribeirão Preto.
[45] MORAES, G.J. DE; FLECHTMANN, C.H.W. 2008. Manual de acarologia. Ribeirão Preto: Holos Editora, 288p.
[46] MORAES, G.J. de; MCMURTRY, J.A.; DENMARK, H.A.; CAMPOS, C.B. 2004. A revised catalog of the mite family Phytoseiidae. Zootaxa, 434, 494p.
[47] FLECHTMANN, C.H.W. 2003. Ácaros em produtos armazenados e na poeira domiciliar. FEALQ: Piracicaba, 97p.
[48] FERLA, N.J.; MARCHETTI, M.M.; GONÇALVEZ, D. 2007. Ácaros predadores (Acari) associados a cultura do morango (Fragaria sp., Rosaceae) e plantas próximas no Esatdo do Rio Grande do Sul. Biota Neotropica, 7: 1-8.
[49] POLETTI, M. 2007. Integração das estratégias de controle químico e biológico para a conservação e liberação dos acaros predadores Neoseiulus californicus (McGregor) e Phytoseiulus macropilis (Banks) (Acari: Phytoseiidae) em programas de manejo do acaro rajado Tetranychus urticae Koch (Acari: Tetranychidae). 2007. 166p. Tese (Doutorado em Ciências: Entomologia) - Escola Superior de Agricultura "Luiz de Queiroz", Universidade de São Paulo, Piracicaba.
[50] BELLINI, M.R.; ARAÚJO, R.V.; BALLAMINUT, J.C.C.; BERTI FILHO, E.; MORAES, G.J. de. 2006. Perspectivas para o controle biológico do acaro rajado em gérberas. 188p. In: Simpósio Brasileiro de Acarologia, 1., Viçosa. Anais.
[51] SATO, M.E.; RAGA, A.; MATIOLI, A.L.; SILVA, R.B. da. 2006. Controle biologico de Tetranychus urticae (Koch) (Acari: Tetranychidae) utilizando Neoseiulus californicus(McGregor) (Acari: Phytoseiidae) em morangueiro. In: Simpósio Brasileiro de Acarologia, 1, 2006. Viçosa. Anais. p. 180.
[52] MONTEIRO, L.B. 2002. Criação de ácaros fitófagos e predadores: Uma caso de Neoseiulus californicus por produtores de maçã. In: PARRA, J.R.P.; BOTELHO, P.S.M.; FERREIRA, B.S.C.; BENTO, J.M.S. (Eds). Controle biologico no Brasil: parasitóides e predadores. São Paulo: Manole, p.351-362.
[53] WATANABE, M. A.; MORAES, G. J. DE; NICOLELLA, G. 1994. Controle biológico do ácaro rajado com ácaros predadores fitoseídeos (Acari: Tetranychidae, Phytoseiidae) em culturas de pepino e morango. Scientia Agricola, 51: 75-81.
[54] BUENO, V. H. P.; POLETTI, M. 2009. Progress with biological control and IPM strategies in protected cultivation in Brazil.. In: IOBC/WPRS working Group, 2009, Chania (Creta). Integrated Control in Protected Crops, Mediterranean Climate IOBC/WPRS Bulletin.. Montfavet (França): INRA, 49: 31-36.
[55] ZHANG, Z.Q. 2003. Mites of greenhouses: identification, biology and control. London: CABI Publishing, 244p.
[56] ZHANG, Z.Q; SANDERSON, J.P. 1995. Twospotted spider mite (Acari: Tetranychidae) and Phytoseiulus persimilis (Acari: Phytoseiidae) on greenhouses roses: spatial distribution and predator efficacy. Journal of Economic Entomology, 88: 352-357.
*[57]* SCHAUSBERGER, P.; WALZER, A. 2001. Combined versus single species release of predaceous mites: predator-predator interactions and pest suppression. Biological Control, 20: 269-278.
[58] BLÜMEL, S.; WALZER, A. 2002. Efficacy of different release strategies of Neoseiulus californicus McGregor e Phytoseiulus persimilis Athias Henriot (Acari: Phytoseiidae) for the control of two-spotted spider mite (Tetranychus urticae Koch) on greenhouses cut roses. Systematic and Applied Acarology, 7: 35-48.
[59] RHODES, E.; LIBURD, O. E.; KELTS, C.; RONDON, S. I.; FRANCIS, R. R. 2006. Comparison of single and combination treatments of Phytoseiulus persimilis, Neoseiulus californicus and Acramite (bifenazate) for control of twosppoted spider mites in strawberry. Experimental and Applied Acarology, 39: 213-225.
[60] MILLS, N.; Pickel, C.; e Ramos, D.; Aerial release of Trichogramma to control codling moth. Pest Management Grants Progress Report, 2002, 16p.
[61] CENTER, T.; Driesche, R. van; e Hoddle, M.; Control of Pests and Weeds by Natural Enemies: An Introduction to biological control. Blackwell Publishing, Singapura, 2008, 488p.
[62] ***BIORESOURCES-*** Disponível em: http://www.bioresources.com.au/pretiosum/PretiosumMethods.htm#aerial%20applic ation
[63] ***AGX-TRANSPRESERV*** https://mundogeo.com/blog/2013/09/19/pioneira-em-drones-no-brasil-agx-e-comprada-pela-transpreserv/
[64] ***MTB SERVIÇOS AÉREOS ESPECIAIS*** - Disponível em: http://www.mtbsae.com.br/
[65] ***DRONECENTER*** - Disponível em: http://www.dronecenter.com.br/
[66] ***YONG-LAK.*** Park e S. Gururajan, Aerial Survey and Management of Invasive Pests. 22/02/2014. Disponível em: http://potomacpartnership.org/pdf/InfoExchange_Dec2013/Presentations/Aerial%20 Survey_YL.Park.pdf
[67] ***HEIGHTTECH*** - Disponível em: http://heighttech.com/en/products/
[68] ***SPORT TURF CONSULTING.*** Biological control of European corn border. - Disponível em: http://www.sportsturf.it/trichogramma-dropping-drone-corn-borer/
[69] *SOLEON* - Disponível em: https://www.soleon.it/en/projekts/soleon-agro
[70] ***AERMATICA3D*** - Disponível em: https://www.aermatica.com/en/italian-drone-solutions-provider/
[71] ***ANATIS BIOPROTECTION*** - Disponível em: http://anatisbioprotection.com/en/news/trichogramma-dropping-by-drone.html
*[72] **KOPPERT***, ***ROTABUG, AIROBUG, MINI-AIRBUG e HUNTER*** - Disponível em:
   https://www.youtube.com/watch?v=GVBvGnAHQwk
   https://www.koppert.com/airobug/
   https://www.koppert.com/mini-airbug/
   http://agricolasantograo.com.br/produtos/controle-biologico/koppert/controle-biologico-hunter-koppert-p-53
   https://www.koppert.com/limonica/
*[73] **XFLY -*** Disponível em: https://www.xflybrasil.com/copia-x800-geo-novo
[74] ***GEOCOM*** - Disponível em: http://geocom.empresaseba.com.br/#
*[75] **AEROAGRI*** - Disponível em: https://www.aeroagri.com.br/
*[76] **ENGEGROW -*** Disponível em: http://www.engegrow.com.br/controle-biologico-drone
[77] ***ONE SOLVE*** - Disponível em: http://onesolve.com.br/
*[78] **AGRIBELA*** - Disponível em: http://www.agribela.com.br/
*[79] **ARPAC*** - Disponível em: http://www.arpacbrasil.com.br/
[80] ***QUEENSLAND*** - Disponível em: http://www.uq.edu.au/news/article/2015/04/drone-used-drop-beneficial-bugs-corn-crop
[81] ***AEROBUGS*** - Disponível em: http://aerobugs.com.au/
   http://aerobugs.com.au/gallery/view/4#prettyPhoto.

## Claims

1. **"MULTI-PURPOSE ON-BOARD SYSTEM FOR INDEPENDENTLY RELEASING BIOLOGICAS AGENTS FOR PRECISION BIOLOGICAL PEST CONTROL",** comprises the integration of a series of components applied to precision biological control in its standard configuration for installation in backpacks, ground vehicles, manned aircraft and unmanned aerial vehicle (100) - UAV or drone; the invention employs a multipurpose embedded system, **characterized by** a high-performance multipurpose electronic equipment (hardware) (10); dedicated or shared GPS/GLONASS/GALILEO (110) drone receiver (100); four different dedicated electromechanical releasers, called loose parasitized eggs releaser (20), loose masses releaser (30), releaser of alive inputs (mites) (40) and releaser of beneficial fungi powder (50), controlled individually or simultaneously by high-performance multipurpose electronic equipment (hardware) (10); configured and controlled using dedicated touchscreen human-machine interface (60); or configured and controlled through planning application in the form of a mobile device (70); or configured in desktop computing system through web software for management and planning (90).

2. **"MULTI-PURPOSE ON-BOARD SYSTEM FOR INDEPENDENTLY RELEASING BIOLOGICAS AGENTS FOR PRECISION BIOLOGICAL PEST CONTROL",** according to claim 1, **characterized by** presenting the following functions: configuration of cruising speed of the drone (or associated vehicle); configuration of the width between lines for coverage of the area; configuration of the releasing rate in milliliters per hectare; totalizer computation (total volume applied); releasing height setting based on fixed value, elevation map or online elevation map; indentation area setting; iterating adjustment of the location and direction of the initial releasing point; iterating adjustment of curves for line changes; definition of one or more custom polygons, reference points, route planning with illustration and iterative area calculation on map: optimized calculation of the instant releasing rate in milliliters per minute based on all previous characteristics for automated operation of each releaser individually or simultaneously; automated instant releasing rate control in milliliters per minute based on the update from *GPS*/*GLONASS*/*GALlLEO* receiver, optionally including differential signal, RTK or not; individual calibration system of the releasers; sending data via serial interface, USB, bluetooth and cloud via Wi-Fi network and mobile internet; custom reporting based on, measurement metrics and counting of quantity and type of pests manually or electronically, environmental data, releaser type, biological input type with batch, date of manufacture and expected date of birth, QR code related to biological inputs; QR code related to biological inputs, customer registration (with administrator and user); automatic billing generation based on customizable customer data, settings, data received, and pricing tables; equipment remote tracking and blocking; iterative navigation data and operation of the aircraft related to displacement on map; and generation of indicators based on artificial intelligence algorithm and machine learning to define intelligent pest combat treatment strategies.

3. **"MULTI-PURPOSE ON-BOARD SYSTEM FOR INDEPENDENTLY RELEASING BIOLOGICAS AGENTS FOR PRECISION BIOLOGICAL PEST CONTROL",** according to claims 1 and 2, **characterized by** presenting a high-performance multi-purpose electronic equipment (hardware) for configuration, control and management of releasers and data generation inherent to the precision biological control (10) that uses: a high-performance CPU processing unit, bluetooth communication interfaces, Wi-FI, UART (serial RS232) and USB, custom inputs and outputs for sensors and digital actuators, and an individual or simultaneous control unit for each releaser dedicated to the automation of each biological input.

4. **"MULTI-PURPOSE ON-BOARD SYSTEM FOR INDEPENDENTLY RELEASING BIOLOGICAS AGENTS FOR PRECISION BIOLOGICAL PEST CONTROL",** according to claim 3, **characterized by** presenting an electronic system to support the sensing and measurement of the actual flow rate and release rate of biological inputs, compatible with customized digital inputs and outputs of the high-performance multipurpose electronic equipment (hardware).

5. **"MULTI-PURPOSE ON-BOARD SYSTEM FOR INDEPENDENTLY RELEASING BIOLOGICAS AGENTS FOR PRECISION BIOLOGICAL PEST CONTROL",** according to claim 1, **characterized by** presenting releaser (20) for the release of biological agents in the form of loose parasitized eggs that makes use of: an accommodation body for the main rotor (21); a controlled rotating circular rotor with compartments dedicated to collect the loose parasitized eggs from a specific compartment and mechanical relief system to maintain the integrity of the loose parasitized eggs according to the releasing rate in milliliters per hectare and all configurations defined in mission planning (22); and an integration support with the body and electromechanical elements and their connections (23).

6. **"MULTI-PURPOSE ON-BOARD SYSTEM FOR INDEPENDENTLY RELEASING BIOLOGICAS AGENTS FOR PRECISION BIOLOGICAL PEST CONTROL",** according to claim 1, **characterized by** presenting releaser (30) for the release of biological agents in the form of loose masses with the possibility of adding repellent that makes use of: an accommodation body for the main rotor (31); a controlled rotating circular rotor based on nylon brushes dedicated to collect the loose masses from specific compartment and separation of these maintaining the integrity of the masses according to the releasing rate in milliliters per hectare and all configurations defined in mission planning (32); and an integration support with the body and electromechanical elements and their connections (33).

7. **"MULTI-PURPOSE ON-BOARD SYSTEM FOR INDEPENDENTLY RELEASING BIOLOGICAS AGENTS FOR PRECISION BIOLOGICAL PEST CONTROL",** according to claim 1, **characterized by** presenting releaser (40) for the release of alive biological agents with the possibility of adding inert material that makes use of: a funnel-shaped compartment for storage of the biological agents (41); an endless thread for movement and mixing of the storage compartment controlled according to the releasing rate in milliliters per hectare and all configurations defined in mission planning (42); a wind force transmission system coupled to the endless thread optimizing the autonomy of the aircraft and charging the batteries in flight (43); of an electronic device based on electrical loads and plastic brushes inserting the condition of electrostatic to the living biological agents and to the inert material generating efficiency in the releases on the canopy in tall plants (44); and a centrifugal release nozzle for distribution of biological agents (45).

8. **"MULTI-PURPOSE ON-BOARD SYSTEM FOR INDEPENDENTLY RELEASING BIOLOGICAS AGENTS FOR PRECISION BIOLOGICAL PEST CONTROL",** according to claim 1, **characterized by** presenting releaser (50) for release of beneficial fungi in the form of dry powder that makes use of: an accommodation body of the exhaust system (or ventilation) and specific connection to the storage compartment (51); a rotating hood (or fan) controlled according to the releasing rate in milliliters per hectare and all configurations defined in mission planning (52); and a releasing nozzle for homogeneous spraying and without powder vortex generation (53).
